# EUROPÄISCHE PATENTSCHRIFT

(11) **EP 1 327 493 B1**
(45) Veröffentlichungstag und Bekanntmachung des Hinweises auf die Patenterteilung: **18.06.2008**
(21) Anmeldenummer: 03000492.3
(22) Anmeldetag: 13.01.2003
(51) Int. Cl.: B23B 49/02

(54) **Vorrichtung zur Positionierung eines Bohrlochs**
Device to locate a drill hole
Dispositif à positionner à forer un trou

(30) Priorität: 12.01.2002 DE 10200919
(43) Veröffentlichungstag der Anmeldung: 16.07.2003
(73) Patentinhaber: Hemmerde, Wilhelm, 53343 Pech (DE)
(72) Erfinder: Hemmerde, Wilhelm, 53343 Pech (DE)
(74) Vertreter: Wanischeck-Bergmann, Axel

(56) Entgegenhaltungen:
- DE-A- 3 518 496
- DE-A- 19 816 733
- DE-U- 9 110 563
- DE-U- 20 104 508
- US-A- 3 436 155
- US-A- 4 023 907

## Beschreibung

Die Erfindung betrifft eine Vorrichtung zur Positionierung eines in eine Fläche eines Gegenstandes einzubringenden Bohrlochs mittels einer Bohrmaschine, bestehend aus einem auf die Fläche aufzulegenden Körper mit zumindest einer die Bohrstelle anzeigenden Markierung.

Aus dem Stand der Technik sind Justier- und Markierungshilfen für Bohrarbeiten bekannt. Hierbei handelt es sich um Schablonen zum Justieren und/oder Markieren der Lage einer oder mehrerer auf einer Fläche vorgesehenen Bohrungen. Dabei ist es bekannt, Bohrungsschablonen mit dem genauen Bild der Befestigungsstellen des festzulegenden Gegenstandes herzustellen. Diese Bohrungsschablonen sind dabei in Form eines Kartons oder eines anderen labilen Materials ausgebildet, auf welchem beispielsweise die zu befestigende Seite eines aufzuhängenden Gegenstandes oder dergleichen mit den einzelnen Befestigungspunkten aufgedruckt ist.

Bei Verwendung einer derartigen Schablone ist zwar gesichert, dass die vorgesehenen Befestigungspunkte und Bohrungen zueinander in exaktem Abstand aufgezeichnet und die Bohrungen insofern auch derart genau anlegbar sind. Den eigentlichen Bohrungsvorgang unterstützen diese Schablonen jedoch nicht.

Beispielsweise offenbart die DE 43 03 318 A1 eine derartige Markierungshilfe, nicht jedoch eine Schablone, die den Bohrvorgang unterstützen kann. Aus der DE 198 16 733 A1 ist eine Markierungshilfe bekannt, die auch als Bohrschablone einsetzbar ist. Diese vorbekannte Markierungshilfe hat jedoch insbesondere die Nachteile, dass es sich um ein Verbrauchsgegenstand handelt, so dass bei häufigem Bedarf eine kostenaufwendige Arbeitsweise erzielt wird. Weiterhin sind für Bohrungen mit verschiedenen Durchmessern verschiedene Bohrschablonen notwendig, was wiederum sehr kostenaufwendig ist. Die voranstehend genannten Druckschriften offenbaren daher Vorrichtungen, die mit Nachteilen behaftet sind.

Bei beiden vorbekannten Vorrichtungen sollen beidseitige Klebebänder zur Befestigung der Vorrichtung zur Anwendung kommen. Dies ist insbesondere bei in Baustellen häufig anzutreffenden staubigen Untergründen nachteilig, da die Haftwirkung derartiger Klebebänder im staubigem Milieu sehr stark nachläst.

Aus der DE 35 18 496 A1 ist weiterhin eine Bohrer-Führungshülse bekannt, die zur Festlegung Spitzen aufweist.

Grundsätzlich besteht bei Bohrarbeiten in Materialien, wie beispielsweise Stein, Fliesen, Metall, Holz, Kunststoffe, Keramik usw. das Problem einer mehr oder weniger großen Differenz zwischen der gewünschten und gegebenenfalls auch angezeichneten Stelle und der tatsächlichen Position des Bohrloches nach erfolgter Bohrung. Das Problem entsteht dadurch, dass es durch den Andruck des Bohrgerätes durch die ausführende Person, die Rotationsbewegung der Bohrnadel sowie der Schlagtechnik von Schlagbohrmaschinen und Bohrhämmern oft dazu kommt, dass die Position des tatsächlich gebohrten Loches von der Position der markierten Bohrstelle abweicht. Im Ergebnis befindet sich das Bohrloch somit nicht exakt in der gewünschten Position, die vorher definiert worden ist. Ganz besonders stellt sich dieses Problem bei sehr harten und/oder glatten Oberflächen wie z.B. Beton, Metall, Keramik, Fliesen.

Daher kommt es häufig, insbesondere bei Materialien mit glatten und/oder harten Oberflächen zu einem nicht zentrischen Bohren, einem Ausschlagen des Bohrloches sowie ferner zu einem Abspringen von Oberflächenmaterial oder schlimmstenfalls sogar zu einem Springen des gesamten Gegenstandes (z.B. Fliese, Stein) während des Bohrvorganges.

Die Folgen sind häufig Probleme bei der folgenden Montage von zu befestigenden Gegenständen wie z.B. Sanitärinstallationen, Aufhängevorrichtungen, Wandgegenständen, Beleuchtungskörpern usw.

Das Problem tritt insbesondere bei in Eigenregie ohne handwerkliche Grundkenntnisse ausgeführten Bohrarbeiten auf. Gleiches gilt aber auch für Arbeiten in handwerklichen und gewerblichen Betrieben sowie ebenfalls in Dienstleistungsunternehmen, insbesondere bei Arbeiten außerhalb von Werkstätten, also immer dann, wenn keine Fixiereinrichtungen vorhanden sind.

Da die bekannten Bohrhilfen als auf Papier gedruckte Schablonen ausgebildet sind, welche beispielsweise für einen an der Wand zu befestigenden Gegenstand entsprechende Orte für die Lage der zu bohrenden Löcher markieren wird lediglich ein Ansatzpunkt für ein zu bohrendes Loch markiert, jedoch in sonst keiner Weise der Bohrvorgang an sich unterstützt.

Die US-A-3,436,155 beschreibt eine Vorrichtung entsprechend dem Oberbegriff von Anspruch 1 zur Positionierung eines in eine Fläche eines Gegenstands einzubringenden Bohrlochs mittels einer Bohrmaschine.

Der Erfindung liegt daher die Aufgabe zugrunde, eine gattungsgemäße Vorrichtung derart zu verbessern, dass die voranstehend dargestellten Probleme und Nachteile vermieden werden.

Zur Lösung dieser Aufgabenstellung schafft die vorliegenden Erfindung eine Vorrichtung nach Anspruch 1.

Vorteilhafte Ausgestaltungen und Weiterbildungen der erfindungsgemäßen Vorrichtung ergeben sich aus den Unteransprüchen.

Die erfindungsgemäße Vorrichtung stellt somit eine Bohrhilfe zur optimalen Durchführung von Bohrungen in Gegenständen aller Materialien, insbesondere mit harten und glatten Oberflächen dar. Insbesondere verbessert sie Justier- und Markierungshilfen derart, dass auf einer Oberfläche, beispielsweise einer Wand oder dergleichen, neben einer schnellen Markierung und Ausrichtung der Lage insbesondere eine punktgenaue Bohrung einer oder mehrerer auf einer Fläche vorgesehenen Bohrungen möglich ist.

Die Vorrichtung dient somit der sicheren und punktgenauen Niederbringung des Bohrloches selbst, sowie zum Kennzeichnen eines Ansatzpunktes für ein zu bohrendes Loch. Hierzu weist die Vorrichtung wenigstens einen plattenartigen Körper oder mehrere, z.B. mit einem Scharnier verbundene plattenartige Körper auf, welche aus einem Werkstoff in einer vorbestimmten Dicke derart ausgebildet sind, dass sich eine formstabile Ausgestaltung ergibt.

Mit der erfindungsgemäßen Vorrichtung werden daher folgende Vorteile erzielt:
- einfache und sichere Konstruktion der Vorrichtung,
- absolut sichere Führung der Bohrernadel,
- Fixierhilfe durch Viertelkreismarkierung,
- Ausführung in handelsüblichen Durchmessergrößen,
- Dauerhafte Verwendbarkeit durch verschleißfestes Material.

Mit der erfindungsgemäßen Vorrichtung wird erreicht, dass beim Anbringen von Bohrlöchern in Materialien aller Art das Bohrloch tatsächlich an der gewünschten Stelle exakt niedergebracht wird und somit die Folgearbeiten problemlos durchgeführt werden können.

Die Erfindung kann von Laien und Freizeit-Handwerkern ebenso wie in professionellen Betrieben aller Art, beispielsweise des Handwerks, der Industrie sowie in Dienstleistungsbetrieben angewendet werden.

Erfindungsgemäß weist die Vorrichtung einen plattenartigen Körper auf, welcher sich über mehrere unter einem Winkel zueinander ausgerichtete Ebenen erstreckt. Der körper ist aus einem Werkstoff in einer vorbestimmten Dicke derart ausgebildet, dass sich eine formstabile, gegen Verschleiß resistente Vorrichtung ergibt.
Als Werkstoffe kommen alle formstabilen Materialien in Betracht, beispielsweise und insbesondere Metalle, Metall-Legierungen, Kunststoffe, wie vorzugsweise Polyvinylchlorid oder dergleichen in Betracht.

Die erfindungsgemäße Ausgestaltung hat den Vorteil, dass das Festhalten des Körpers erleichtert wird und ein Bohrer durch die erfindungsgemäße Vorrichtung aktiv geführt wird, so dass ein Abrutschen des Bohrers von einem Anriß des zu bohrenden Loches wirksam vermieden wird.

In einer bevorzugten Ausführungsform erreicht man eine einfache und sichere Handhabung der erfindungsgemäßen Vorrichtung an einem bestimmten Ort dadurch, dass an dem plattenartigen Körper im Bereich zumindest einer Oberfläche eine Gummierung und/oder Spitzen zur Sicherung gegen ein mögliches Verrutschen während des Bohrvorganges angeordnet ist bzw. sind. Durch diese Ausgestaltung ergibt sich ein sicheres und lagegenaues Bohren, insbesondere beim Bohren in Gegenständen mit glatten und/oder harten Oberflächen und ggf. mit weicher Lasur.

Bei einer weiteren bevorzugten Ausführungsform der erfindungsgemäßen Vorrichtung ist vorgesehen, dass die Markierung zumindest über einen Teilbereich ihrer Tiefe konisch ausgebildet ist, wobei die vorbestimmte Tiefe beispielsweise 1 bis 1,5 mm oder sich auf die gesamte Dicke des Körpers beziehen kann und die konische Ausbildung in einem Winkel von z.B. 35° bis 145° ausgeführt ist. Dies ermöglicht das sichere Anbringen von Bohrlöchern auch in schrägen Bohrlochführungen entsprechend der vorbezeichneten oder anderer Winkelbereiche.

Die Vorrichtung kann eine Handhabe, insbesondere in Form eines zusätzlichen Handgriffs aufweisen.

Ein besonders einfaches Justieren der erfindungsgemäßen Vorrichtung auf einem Anriß für eine Bohrung erzielt man dadurch, dass der plattenartige Körper in quadratische Teilbereiche unterteilt wird. Hierdurch ist es möglich, ohne eine durch den plattenartigen Körper vollständig hindurchgehende Markierung einen Bohrpunkt mit der Vorrichtung exakt dadurch zu treffen, dass zwei, insbesondere diagonal gegenüberliegende Ecken des quadratischen, plattenartigen Körpers auf einer Anrißlinie ausgerichtet werden.

Weitere Merkmale und Vorteile der Erfindung ergeben sich aus der nachfolgenden Beschreibung bevorzugter Ausführungsformen in der zugehörigen Zeichnung. In der Zeichnung zeigen:
- Figur 1: eine nicht erfindungsgemäße Vorrichtung in Draufsicht;
- Figur 2: eine nicht erfindungsgemäße Vorrichtung in Draufsicht;
- Figur 3: eine nicht erfindungsgemäße Vorrichtung in Draufsicht;
- Figur 4: eine nicht erfindungsgemäße Vorrichtung in Draufsicht;
- Figur 5: eine nicht erfindungsgemäße Vorrichtung in Draufsicht;
- Figur 6: eine nicht erfindungsgemäße Vorrichtung in Draufsicht;
- Figur 7: eine erste Ausführungsform einer erfindungsgemäßen Vorrichtung in perspektivischer Ansicht;
- Figur 8: eine zweite Ausführungsform einer erfindungsgemäßen Vorrichtung in Draufsicht;
- Figur 9: eine dritte Ausführungsform einer erfindungsgemäßen Vorrichtung in Draufsicht;
- Figur 10: eine nicht erfindungsgemäße Vorrichtung in Draufsicht;
- Figur 11: die Ausführungsform gemäß Figur 1 bis 10 in Seitenansicht;
- Figur 12: eine alternative Ausführungsform zu Figur 11;
- Figur 13: eine alternative Ausführungsform zu Figur 11;
- Figur 14: eine alternative Ausführungsform zu Figur 11;
- Figur 15: eine alternative Ausführungsform zu Figur 11 in einer Draufsicht;
- Figur 16: diverse Ausgestaltung von Handgriffen für eine Vorrichtung nach einer der Figuren 1 bis 15
- Figur 17: die Vorrichtung gemäß Figur 1 bis 10 in einer geschnitten dargestellten Seitenansicht und
- Figur 18: eine alternative Ausgestaltung der Vorrichtung gemäß Figur 1 bis 10 in einer geschnitten dargestellten Seitenansicht.

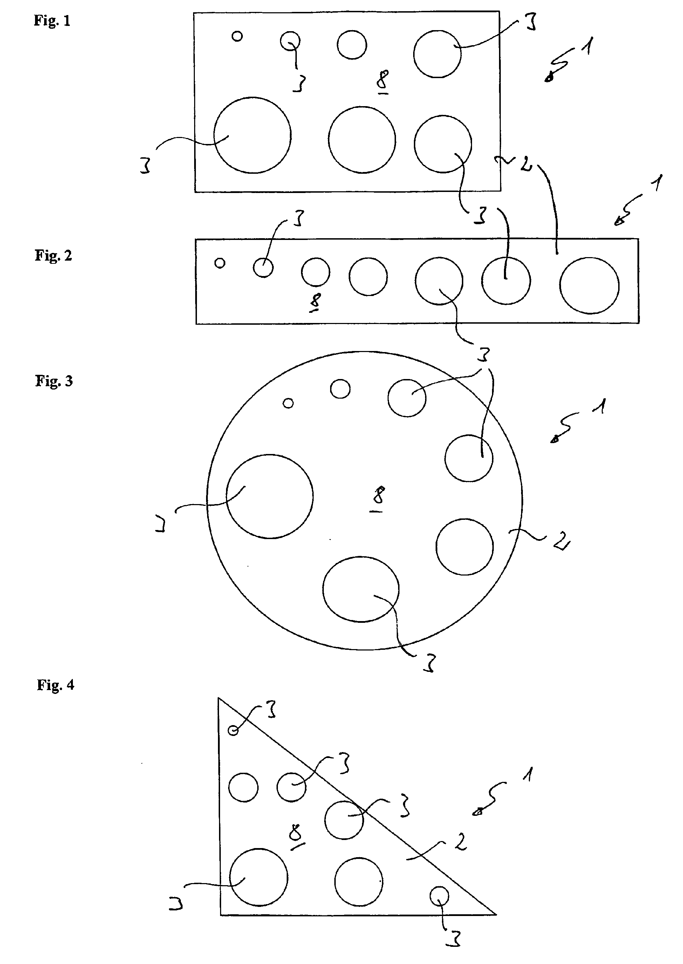

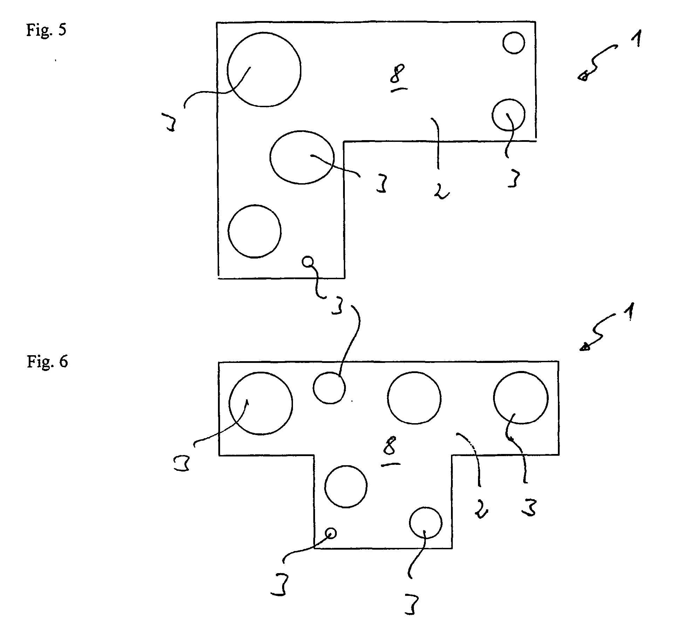

Eine in den Figuren 1 bis 18 dargestellte Vorrichtung 1 besteht in der einfachsten Ausführung aus einem flachen, plattenförmig ausgebildetem Körper 2, der zweckmäßigerweise eine Dicke von ca. 1 mm bis 3 mm aufweist. Die geometrische Form des Körpers 2 kann in unterschiedlichster Ausgestaltung vorgesehen sein. Figur 1 zeigt einen rechteckigen Körper 1 dessen Länge unwesentlich größer als dessen Breite ist. Der Körper 1 nach Figur 2 hat demgegenüber eine im Verhältnis zu seiner Breite große Länge, so dass ein stabförmige Ausgestaltung vorliegt. Daneben kann der Körper 1 auch rund oder dreieckig ausgebildet sein, wie es in den Figuren 3 und 4 dargestellt ist. Ferner sind auch winklige Körper 2 möglich, wie es sich aus den Figuren 5 und 6 ergeben.

Der Körper 2 weist mehrere Markierungen 3 in Form von kreisrunden Bohrungen auf, wobei die Bohrungen unterschiedliche, nämlich größer werdende Durchmesser aufweisen. Die Markierungen 2 sind entweder in einer oder mehreren Linien nebeneinander und/oder entsprechend der Außenkontur, vorzugsweise kreisbogenabschnittförmig, des Körpers 2 und/oder in Eckbereichen des Körpers 2 angeordnet.

Die Vorrichtung 1 zur Positionierung eines in eine Fläche eines Gegenstandes einzubringenden Bohrlochs mittels einer Bohrmaschine, besteht aus einem rigiden, insbesondere gegen Materialabtrag im Bereich der Markierung 2 geschützten Material, insbesondere aus vergütetem Stahl oder Leichtmetall, einem zähharten Kunststoff und/oder aus einem Materialkomposit.

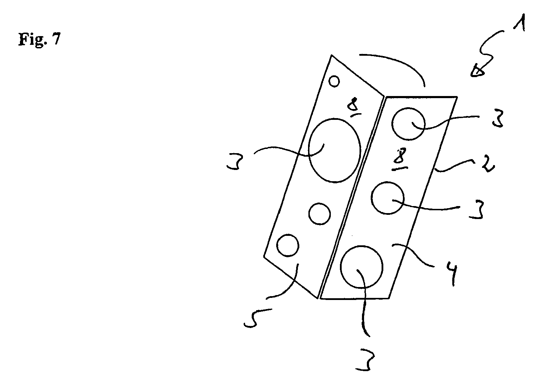

Es ist zu erkennen, dass der Körper 2 mit der Markierung 3 als regelmäßige Flächenfigur ausgebildet ist. In Figur 7 ist ein Körper 2 dargestellt, der aus zwei Abschnitten 4 und 5 besteht, die Ebenen bilden, welche unter einem Winkel zueinander ausrichtbar sind, wobei der Winkel insbesondere variabel einstell- und fixierbar ist. Bevorzugte Winkel sind 90° bis 170° groß. Die beiden Abschnitte 4 und 5 sind flächengleich ausgebildet weisen aber Bohrungen unterschiedlicher Durchmesser auf.

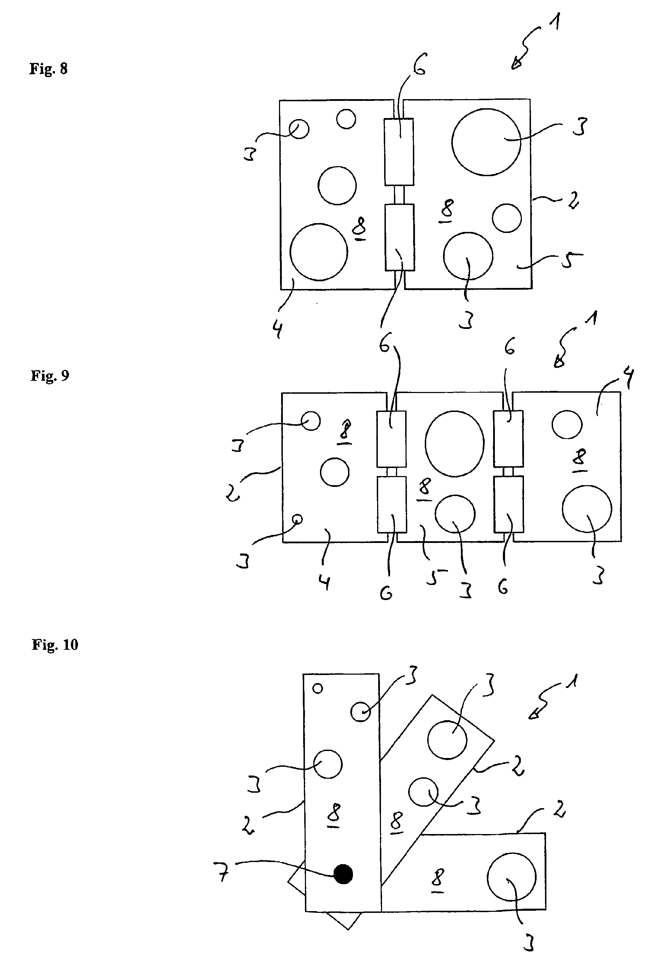

In den Figuren 8 und 9 sind Ausführungsformen der Vorrichtung 1 dargestellt, die aus Abschnitten 4, 5 bestehen, die miteinander über Verbindungselemente 6 verbunden sind. Die Verbindungselemente 6 sind als Scharniere, Nieten oder dergleichen ausgebildet. Es können mehrere Abschnitte 4, 5 miteinander verbunden werden.

Eine weitere Vorrichtung 1 ist in Figur 10 dargestellt. Bei dieser sind drei Körper 2 über ein Niet 7 schwenkbeweglich miteinander verbunden. Jeder Körper weist zumindest eine Bohrung auf, wobei die Bohrungen in den drei Körpern 2 unterschiedliche Durchmesser aufweisen.

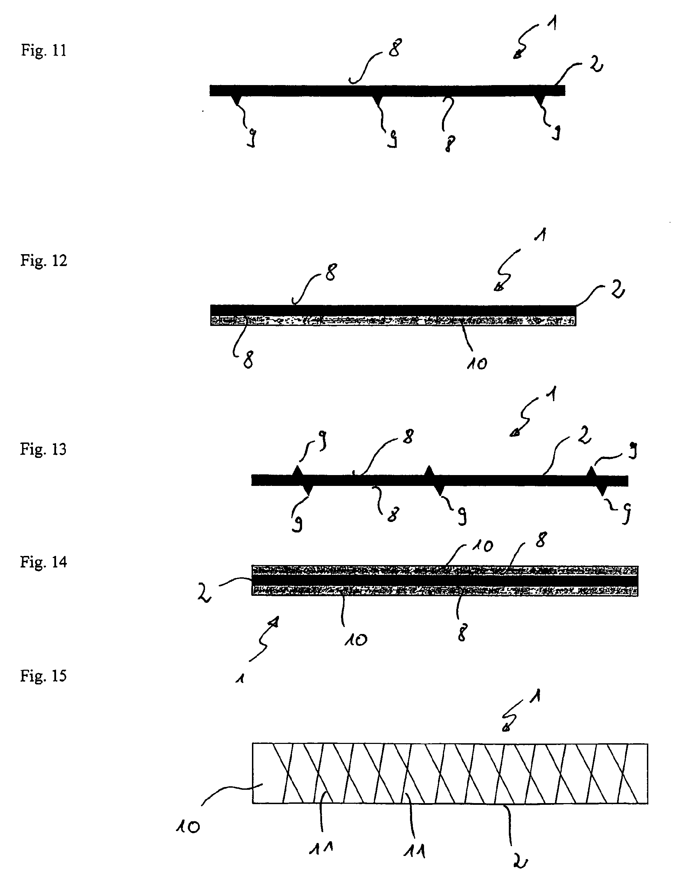

Die Figuren 11 bis 15 zeigen die Vorrichtung 1 zum Teil in Seitenansicht und gemäß Figur 15 in einer Draufsicht mit Einrichtungen, die eine lagegenaue Anordnung auf der zu bohrenden Fläche sicher stellt. In den Figuren 11 und 13 sind auf einer oder beiden Oberflächen 8 der Vorrichtung 1 Andruckspitzen 9 angeordnet. Additiv oder Alternativ können die Oberflächen 8 mit einer gummierten Beschichtung 10 versehen sein. Selbstverständlich können gegenüberliegende Oberflächen 8 mit unterschiedlichen Einrichtungen versehen sein.

In Figur 15 ist eine Oberfläche 8 einer Vorrichtung 1 mit einer alternativen Ausgestaltung dargestellt. In der Oberflächen 8 sind sich kreuzende Rillen 11 angeordnet, welche den Reibkoeffizienten erhöhen

Die Vorrichtung 1 kann einen Körper 2 aufweisen, der sandwichartig aufgebaut ist und zumindest aus einer Metallschicht und einer Kunststoffschicht besteht, wobei die Kunststoffschicht mit einem hohen Reibkoeffizienten auf die zu bearbeitende Fläche aufzulegen ist.

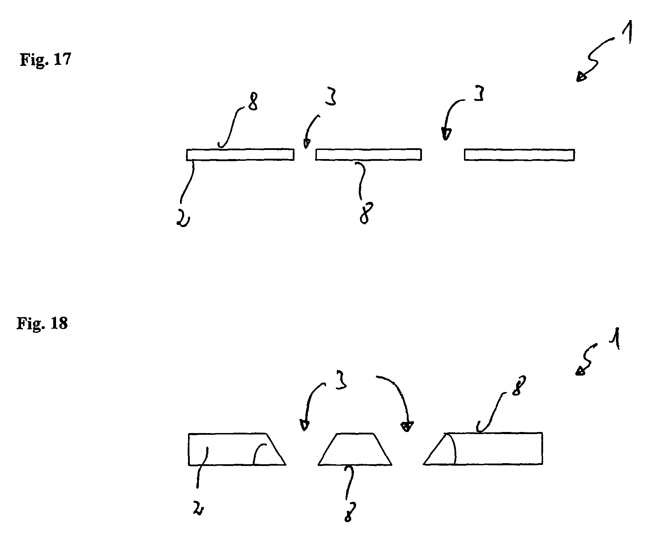

Gemäß den Figuren 17 und 18 sind die Markierungen 3 als Bohrungen mit gleichbleibendem oder sich konisch verändernden Verlauf ausgebildet. Die Markierungen können auch nur in einem Teilbereich konisch ausgebildet sein. Die Konizität weist einem Winkel zwischen 35° und 145° zur Oberfläche 8 des Körpers 2 auf.

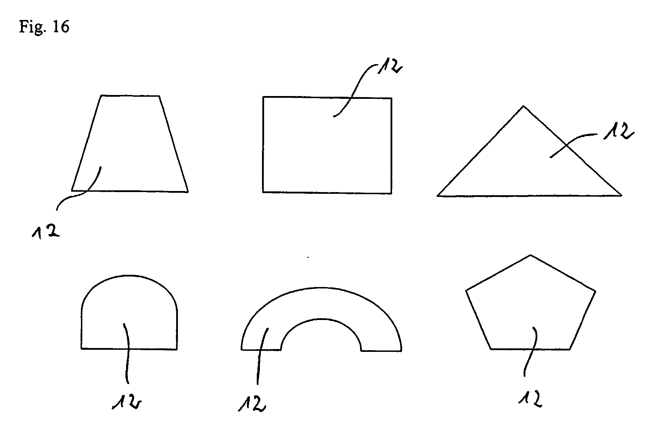

Ergänzend können an dem Körper 2 eine Handhabe, insbesondere ein Handgriff 12 befestigt sein. Mögliche Ausgestaltungen des Handgriffs 12 sind in Figur 16 dargestellt.

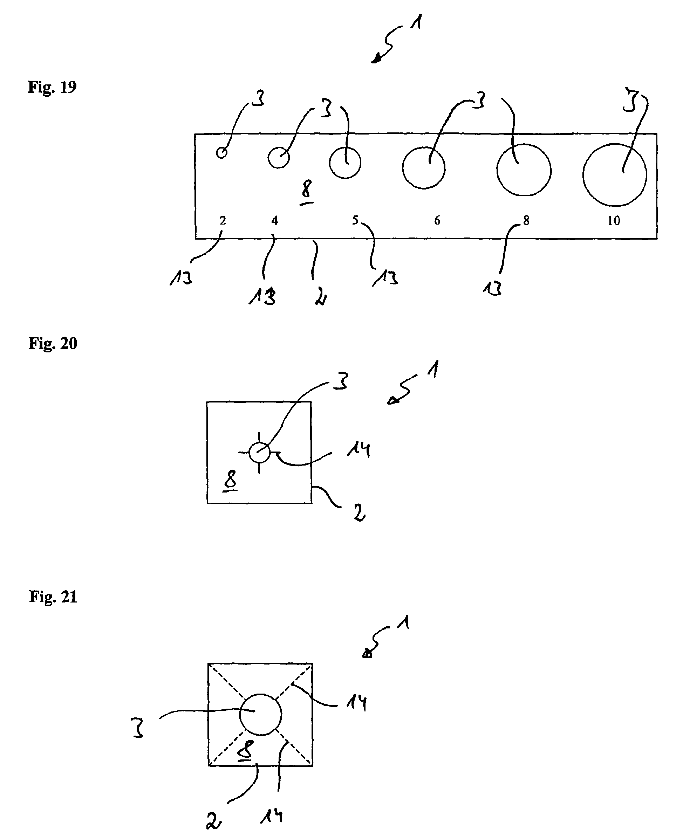

Gemäß Figur 19 ist bei der Vorrichtung 1 vorgesehen, dass jede Markierung 3 eine Beschriftung 13 mit wesentlichen Daten, beispielsweise Durchmesserangaben aufweist.

In den Figuren 20 und 21 sind Ausführungsformen der Vorrichtung 1 dargestellt, bei denen jede Markierung 3 über ihren Umfang in gleichmäßigen Abständen angeordnete, zentrisch ausgerichtete im Körper 2 vertiefte Linien 14 aufweist. Es sind vier Linien 14 im Abstand von 90° um die Markierung 3 angeordnet.

Die Anzahl und Auswahl der Ausgestaltungsformen sowie der Markierungen 3 kann sich aus der vorgegebenen geometrischen Form, z.B. Dreieck mit nur drei Löchern an den Ecken und ggf. eines in der Mitte, ergeben und variabel je nach Bedarf unterschiedlich gestaltet sein in Abhängigkeit von Kundenbedarf, Kalkulation, Produktionsvorgang und Herstellungskosten.

Die Gestalt des Körpers 2 kann somit alle denkbaren regelmäßigen Flächen (z.B. Dreieck, Viereck, Vieleck, Kreis, Ellipse, usw.) und unregelmäßige Flächen annehmen. Hier ist je nach Ausgestaltung jede andere Formgebung denkbar. Es kann sich - je nach der gewünschten Anzahl von Markierungen 3 - aber auch um eine Vorrichtung 1 mit mehreren verbundenen Abschnitten 4, 5 handeln. Die Größe der jeweiligen Abschnitten 4, 5 hängt von der Ausführungsform und der Anzahl und der Größe der Markierungen 3 ab.

In einer Ausführungsform kann die erfindungsgemässe Vorrichtung 1 in leicht abgewinkelter Ausführung mit hinsichtlich ihres Durchmessers verschiedenen Markierungen 3 ausgebildet sein. Durch die leicht abgewinkelte Form wird das Festhalten während des Bohrvorganges wesentlich erleichtert. Die zwei plattenartigen Teilbereiche können statt einer festen Verbindung auch mit einem oder mehreren Scharnieren verbunden werden. Die feste Positionierung während des Bohrvorganges erfolgt dann über den Andruck mit der freien Hand, während die andere Hand die Bohrmaschine führt.

Die Außenmaße des Körpers 2 sind abhängig von der Formgebung sowie der Anzahl und Größe der Markierungen 3.

In den Körper 2 sind Bohrungen mit unterschiedlichem Durchmesser eingebracht, z.B. 2 mm bis z.B. 20 mm, ggf. zuzüglich einer minimalen Toleranz von ca. 0,1 mm, um eine bessere Führigkeit des Bohrers zu erreichen. Die Größe dieser Bohrungen orientiert sich an den (handelsüblichen) Bohrnadelformaten.

Anordnung und Kombination der Bohrungen in dem Körper 2 ist beliebig ausführbar und variabel.

In einer besonders bevorzugten Ausführungsform der erfindungsgemäßen Vorrichtung 1 ist die Markierung 3 mit einer vorbestimmten Tiefe konisch ausgebildet, wobei die vorbestimmte Tiefe beispielsweise 1 bis 1,5 mm oder sich auf die gesamte Dicke des Körpers 2 beziehen kann und die konische Ausbildung in einem Winkel von z.B. 35 Grad bis z.B. 145 Grad ausgeführt ist. Dies ermöglicht das sichere Anbringen von Bohrlöchern auch in schrägen Bohrlochführungen entsprechend der vorbezeichneten oder anderer Winkelbereiche.

Eine Beschriftung 13 bezeichnet die jeweilige Größe der Markierung, so dass der Anwender sofort die entsprechend passende Bohrernadel auswählen kann.

Zur besseren Handhabung können im Abstand von jeweils 90 Grad rund um das Bohrloch 3 kleine Linien 14 als Viertelkreismarkierung vertieft in den Körper 2 eingebracht sein, so dass mit insgesamt vier Linien 14 pro Bohrloch der jeweilige Mittelpunkt der zu bohrenden Bohrstelle exakt festgelegt werden kann. Alternativ kann die Führung der Linien 14 diagonal über eine quadratischen Teilfläche des Körpers 2 oder als kurze Linie 14 direkt am Schablonenloch erfolgen. Die Linien 14 können eine vom Körper 2 abweichende Farbgebung aufweisen, um Ihre Erkennbarkeit auch bei schlechten Lichtverhältnissen sicherzustellen.

Um das Arbeiten mit der Vorrichtung 1 auch in Eckbereichen und Winkeln zu ermöglichen eigen sich besonders dreieckige und viereckige Formen, bei denen die häufigsten Durchmesser der auszuführenden Bohrlöcher, z.B. 4mm, 6mm, 8mm in den Ecken der Vorrichtung angeordnet sind.

Auf zumindest einer Oberfläche 8 des Körpers 2 sind spitze Vorsprünge 9 als spitze oder runde Materialanhäufungen von ca. 1 mm Höhe ausgebildet und bestehen insbesondere aus rutschfestem Hartplastik, Hartgummi oder ähnlichen Materialien. Diese besondere Konstruktion bewirkt folgende entscheidende Vorteile:

Die Vorrichtung 1 kann durch diese Ausgestaltung an der gewünschten Stelle des einzubringenden Bohrlochs besser fixiert werden und nicht verrutschen, da sich der Andruck der Vorrichtung 1 auf die Materialanhäufungen konzentriert und ein erhöhter Flächendruck erzielt wird Dies ist deshalb ein entscheidender Vorteil, da erfahrungsgemäß durch die in Bewegung befindliche Bohrnadel eine Verschiebung erfolgen könnte. Die besondere Präzision der Bohrung an der gewünschten Stelle wird dadurch nochmals deutlich gesteigert.

Durch die punktuell angebrachten Materialanhäufungen entsteht ein kleiner Zwischenraum zwischen dem zu bohrenden Gegenstandes (z.B. einer Wand) und der Vorrichtung 1. Durch diesen Zwischenraum kann zusätzlich das durch die Bohrung freigesetzte Material, nämlich feinkörniges Bohrmehl abfließen.

Alternativ kann die Oberfläche 8 des Körpers 2 teil- oder vollflächig mit einer Beschichtung versehen sein, die ein Verrutschen der Vorrichtung 1 insbesondere auf Materialien mit harten und/oder glatten Flächen verhindert. Als Beschichtung eignen sich beispielsweise Gummi, Kunststoffe oder dergleichen rutschhemmende Stoffe.

Eine weitere Möglichkeit der Ausgestaltung zur Vermeidung des Verrutschens der Vorrichtung 1 beim Bohrvorgang ist, zumindest eine Oberfläche 8 des plattenartigen Körpers 2 mit tiefen Rillen 11, z.B. im Rautenmuster, auszuführen.

Zusätzlich kann ein Handgriff 12 vorgesehen sein. Der Handgriff 12 kann fest oder lösbar am Körper 2 befestigt sein. Dies kann die Handhabung erleichtern sowie die Sicherheit bei abrutschenden Bohrern verbessern.

Der Körper 2 kann aus Materialien verschiedenster Art gefertigt werden. Bevorzugt geeignet sind Materialien, die besonders abriebfest sind, um beim laufenden Bohrbetrieb einen schnellen Abrieb zu verhindern. Deshalb könnte es sich z.B. um Metalle, Hartplastik (PVC, u.a.) oder Keramikstoffe handeln. Es können auch unterschiedliche Materialien eingesetzt werden. Ferner können die als Bohrungen ausgebildeten Markierungen 3 Einsätze aus verschleißfestem Material aufweisen, mit dem die Wandungen der Bohrungen vor Verschleiß geschützt werden.

Die Herstellung des plattenartigen Körpers erfolgt beispielsweise im Kunststoffspritzverfahren. Alternativ ist es statt dessen auch möglich, die Vorrichtung in einem Extruderverfahren herzustellen.

Zuerst werden - wie üblich - die Punkte angezeichnet, an denen das Bohrloch gebohrt werden soll. Normalerweise erfolgt nun direkt die Bohrung, bei denen die dargestellten Probleme des Verrutschens entstehen können. Statt dessen nimmt man nunmehr mit der einen Hand die Vorrichtung 1 und justiert sie mittig um die angezeichnete Bohrstelle. Es ist dabei darauf zu achten, dass die Stärke der Bohrernadel und der Durchmesser der ausgewählten Bohrung der Vorrichtung 1 übereinstimmen. Mit der anderen Hand hält man die Bohrmaschine und bohrt ca. 3mm bis 5mm tief. Jetzt kann man die Vorrichtung entfernen, da ein Verrutschen der Bohrstelle nicht mehr möglich ist. Das Bohrloch wird dann weiter bis zur gewünschten Tiefe gebohrt.

## Patentansprüche

1. Vorrichtung zur Positionierung eines in eine Fläche eines Gegenstandes einzubringenden Bohrlochs mittels einer Bohrmaschine, bestehend aus einem auf die Fläche aufzulegenden Körper mit zumindest einer die Bohrstelle anzeigenden Markierung, wobei der Körper (2) mit der Markierung (3) aus einem rigiden, insbesondere gegen Materialabtrag im Bereich der Markierung (3) geschützten Material besteht und dass die Markierung (3) als Bohrung mit vorgegebenem Durchmesser ausgebildet ist,
**dadurch gekennzeichnet,**
**dass** sich der Körper (2) über mehrere unter einem Winkel zueinander ausgerichtete Ebenen erstreckt, wobei der Winkel insbesondere variabel einstell- und fixierbar ist.

2. Vorrichtung nach Anspruch 1,
**dadurch gekennzeichnet,**
**dass** der Körper (2) mit der Markierung (3) als regelmäßige und unregelmäßige Flächenfigur ausgebildet ist.

3. Vorrichtung nach Anspruch 1,
**dadurch gekennzeichnet,**
**dass** der Körper (2) mehrere Markierungen (3), insbesondere unterschiedlicher Durchmesser aufweist.

4. Vorrichtung nach Anspruch 1,
**dadurch gekennzeichnet,**
**dass** der Körper (2) aus einem Metall, insbesondere vergütetem Stahl oder Leichtmetall, einem zähharten Kunststoff und/oder aus einem Materialkomposit besteht.

5. Vorrichtung nach Anspruch 1,
**dadurch gekennzeichnet,**
**dass** der Körper (2) sandwichartig aufgebaut ist und zumindest aus einer Metallschicht und einer Kunststoffschicht besteht, wobei die Kunststoffschicht auf die zu bearbeitende Fläche aufzulegen ist.

6. Vorrichtung nach Anspruch 1,
**dadurch gekennzeichnet,**
**dass** der Körper (2) auf seiner auf die Fläche aufzulegenden Oberfläche (8) Elemente (9) zur Fixierung der Lageanordnung aufweist.

7. Vorrichtung nach Anspruch 6,
**dadurch gekennzeichnet,**
**dass** die Elemente (9) zur Fixierung der Lageanordnung als Beschichtung (10), insbesondere als Gummierung und/oder spitze Vorsprünge (9) ausgebildet sind, welche in die Fläche eindrückbar sind.

8. Vorrichtung nach Anspruch 1,
**dadurch gekennzeichnet,**
**dass** die Markierung (3) zumindest in einem Teilbereich konisch ausgebildet ist.

9. Vorrichtung nach Anspruch 8,
**dadurch gekennzeichnet,**
**dass** die Konizität einem Winkel zwischen 35° und 145° zur Oberfläche (8) des Körpers (2) aufweist.

10. Vorrichtung nach Anspruch 1,
**dadurch gekennzeichnet,**
**dass** an dem Körper (2) eine Handhabe, insbesondere ein Handgriff (12) befestigt ist.

11. Vorrichtung nach Anspruch 1,
**dadurch gekennzeichnet,**
**dass** jede Markierung (3) eine Beschriftung (13) mit wesentlichen Daten aufweist.

12. Vorrichtung nach Anspruch 1,
**dadurch gekennzeichnet,**
**dass** jede Markierung (3) über ihren Umfang in gleichmäßigen Abständen angeordnete, zur Markierung (3) zentrisch ausgerichtete im Körper (2), vorzugsweise vertiefte Linien (14) aufweist.

13. Vorrichtung nach Anspruch 12,
**dadurch gekennzeichnet,**
**dass** vier Linien (14) im Abstand von 90° um die Markierung (3) angeordnet sind.

## Claims

1. A device for positioning a drill hole to be formed in a surface of an article by means of a drilling machine consisting of a body to be positioned on the surface with at least one marking indicating the drilling position, wherein the body (2) with the marking (3) consists of a rigid material protected, in particular, against the removal of material in the vicinity of the marking and that the marking (3) is in the form of a hole with a predetermined diameter, **characterised in that** the body (2) extends over a plurality of planes aligned at an angle to one another, wherein the angle is, particularly, variably adjustable and fixable.

2. A device as claimed in claim 1, **characterised in that** the body (2) with the marking (3) is in the form of a regular and irregular surface figure.

3. A device as claimed in claim 1, **characterised in that** the body (2) has a plurality of markings (3), particular of different diameter.

4. A device as claimed in claim 1, **characterised in that** the body (2) consists of a metal, particularly hardened steel or light metal, a tough plastic and/or of a material composite.

5. A device as claimed in claim 1, **characterised in that** the body (2) is of sandwich-like construction and consists of at least one metal layer and one plastic layer, whereby the plastic layer is to be positioned on the surface to be processed.

6. A device as claimed in claim 1, **characterised in that** the body (2) has elements (9) on its surface (8) to be positioned on the surface for fixing the positional arrangement.

7. A device as claimed in claim 8, **characterised in that** the elements (9) for fixing the positional arrangement are constructed in the form of a coating (10), particularly a rubber coating and/or in the form of pointed projections (9), which may be pressed into the surface.

8. A device as claimed in claim 1, **characterised in that** the marking (3) is of conical construction, at least in one region.

9. A device as claimed in claim 8, **characterised in that** the conicity has an angle of between 35° and 145° to the surface (8) of the body (2).

10. A device as claimed in claim 1, **characterised in that** a hand grip, particularly a handle (12), is fastened to the body (2).

11. A device as claimed in claim 1, **characterised in that** each marking (3) has lettering (13) with important data.

12. A device as claimed in claim 1, **characterised in that** each marking (3) has lines (14) which are arranged at uniform distances over its periphery and are aligned centrally with respect to the marking (3) and are preferably recessed in the body (2).

13. A device as claimed in claim 12, **characterised in that** four lines (14) are arranged at a spacing of 90° about the marking (3).

## Revendications

1. Dispositif pour positionner un trou à percer dans une surface d'un objet au moyen d'une perceuse, composé d'un corps à poser sur la surface avec au moins un marquage indiquant l'emplacement du trou, le corps (2) pourvu du marquage (3) étant fait d'un matériau rigide, en particulier protégé contre l'enlèvement de matière au niveau du marquage (3), et dans lequel le marquage (3) est conçu comme un trou d'un diamètre prédéterminé, **caractérisé en ce que** le corps (2) s'étend sur plusieurs plans formant un angle les uns par rapport aux autres, l'angle pouvant en particulier être ajusté et fixé de façon variable.

2. Dispositif selon la revendication 1, **caractérisé en ce que** le corps (2) portant le marquage (3) est conçu comme une figure plane régulière et irrégulière.

3. Dispositif selon la revendication 1, **caractérisé en ce que** le corps (2) présente plusieurs marquages (3), en particulier de diamètre différent.

4. Dispositif selon la revendication 1, **caractérisé en ce que** le corps (2) se compose d'un métal, en particulier d'acier affiné ou de métal léger, d'une matière plastique dure et/ou d'un matériau composite.

5. Dispositif selon la revendication 1, **caractérisé en ce que** le corps (2) est construit en sandwich et se compose d'au moins une couche de métal et une couche de matière plastique, la couche de matière plastique devant être posée sur la surface à travailler.

6. Dispositif selon la revendication 1, **caractérisé en ce que** le corps (2) présente sur sa face (8) à poser sur la surface des éléments (9) destinés à fixer le positionnement.

7. Dispositif selon la revendication 6, **caractérisé en ce que** les éléments (9) destinés à fixer le positionnement sont conçus comme un revêtement (10), en particulier du caoutchouc et/ou des saillies pointues (9) qui peuvent être enfoncées dans la surface.

8. Dispositif selon la revendication 1, **caractérisé en ce que** le marquage (3) a une forme conique au moins dans une zone partielle.

9. Dispositif selon la revendication 8, **caractérisé en ce que** la conicité présente un angle de 35° à 145° par rapport à la face (8) du corps (2).

10. Dispositif selon la revendication 1, **caractérisé en ce qu'**un moyen de préhension en particulier une poignée (12), est fixé sur le corps (2).

11. Dispositif selon la revendication 1, **caractérisé en ce que** chaque marquage (3) comporte une inscription (13) avec des données essentielles.

12. Dispositif selon la revendication 1, **caractérisé en ce que** chaque marquage (3) présente sur sa circonférence des lignes (14) dans le corps (2) disposées à intervalles réguliers sur sa circonférence, centrées par rapport au marquage (3) et de préférence renfoncées.

13. Dispositif selon la revendication 12, **caractérisé en ce que** quatre lignes (14) sont disposées autour du marquage (3) à intervalles de 90°.
